# EUROPEAN PATENT SPECIFICATION

(11) **EP 3 888 987 B1**
(45) Date of publication and mention of the grant of the patent: **09.10.2024**
(21) Application number: 19902543.8
(22) Date of filing: 30.12.2019
(51) Int. Cl.: B60W 30/095, B60W 40/02, B60W 40/06, B60W 30/18, B60W 60/00

(54) **LANE SELECTION METHOD FOR VEHICLE WHEN SELF-DRIVING, SELECTION SYSTEM, AND VEHICLE**
FAHRSPURAUSWAHLVERFAHREN FÜR EIN FAHRZEUG IM AUTONOMEN FAHRBETRIEB, AUSWAHLSYSTEM UND FAHRZEUG
PROCÉDÉ DE SÉLECTION DE VOIE POUR VÉHICULE LORS D'UN AUTO-PILOTAGE, SYSTÈME DE SÉLECTION ET VÉHICULE

(30) Priority: 29.12.2018 CN 201811638303
(43) Date of publication of application: 06.10.2021
(73) Proprietor: Great Wall Motor Company Limited, Hebei 071000 (CN)
(72) Inventor: WANG, Tianpei, Baoding, Hebei 071000 (CN); BU, Yushuai, Baoding, Hebei 071000 (CN); GE, Jianyong, Baoding, Hebei 071000 (CN); ZHANG, Kai, Baoding, Hebei 071000 (CN); ZHEN, Longbao, Baoding, Hebei 071000 (CN); HE, Lin, Baoding, Hebei 071000 (CN); REN, Yaxing, Baoding, Hebei 071000 (CN); QIN, Chuang, Baoding, Hebei 071000 (CN); GAO, Shasha, Baoding, Hebei 071000 (CN); ZHANG, Lu, Baoding, Hebei 071000 (CN)
(74) Representative: dompatent von Kreisler Selting Werner - Partnerschaft von Patent- und Rechtsanwälten mbB
(86) International application number: PCT/CN2019/130060
(87) International publication number: WO 2020/135880

(56) References cited:
- WO-A2-2018/132608
- CN-A- 107 458 373
- CN-A- 108 139 756
- CN-A- 108 534 792
- CN-A- 108 583 578
- CN-A- 108 583 578
- CN-A- 108 657 065
- CN-A- 108 698 601
- CN-A- 110 614 995
- US-A1- 2017 371 337
- US-A1- 2018 170 327
- US-A1- 2018 170 327
- US-A1- 2018 253 975

## Description

### CROSS-REFERENCES TO RELATED APPLICATIONS

The present invention claims priority to Chinese Patent Application No. 201811638303.0, titled "LANE SELECTION METHOD FOR VEHICLE WHEN SELF-DRIVING, SELECTION SYSTEM, AND VEHICLE", filed by Great Wall Motor Co., on December 29, 2018.

### FIELD

The present invention relates to the technical field of automatic-driving of vehicles, and in particular to a lane selection method, a lane selection system for an automatic-driving vehicle, and a vehicle.

### BACKGROUND

An automatic-driving vehicle refers to sensing a road environment through an on-board sensor system, automatically planning a driving route and controlling the driving of a vehicle. In the field of vehicle automatic-driving, it is desired to provide a method for selecting a target lane according to environment and obstacles of lanes.
US 2018/253975 A1 describes a lane change estimation device that includes a detection unit that detects a surrounding situation of an own-vehicle, a first index value deriving unit that derives a first index value according to a traveling-direction-related relationship between each of a plurality of pairs of vehicles, each pair including two vehicles among the own-vehicle, a first vehicle traveling in front of the own-vehicle in a first lane in which the own-vehicle travels, a second vehicle traveling in front of the own-vehicle in a second lane adjacent to the first lane, and a third vehicle traveling behind the second vehicle in the second lane on the basis of the surrounding situation of the own-vehicle, and an estimation unit that estimates a probability of lane change of the third vehicle on the basis of the first index value derived and a lateral position of the third vehicle.
WO 2018/132608 A2 describes systems and methods to enable detection of occlusion zones while navigating a host vehicle. In one implementation of WO 2018/132608 A2, a navigation system for a host vehicle includes at least one processing device. The at least one processing device in WO 2018/132608 A2 is programmed to receive, from a camera, a plurality of images representative of an environment of the host vehicle; analyze the plurality of images to identify at least one pedestrian occlusion zone in an environment of the host vehicle; and cause a navigational change for the host vehicle based on the identified at least one pedestrian occlusion zone.

### SUMMARY

In view of above, a first object of the present invention is to provide a lane selection method for an automatic-driving vehicle, which can select a target lane according to a lane environment and an obstacle nearby when the vehicle is automatically driving.
Objects of the present invention are achieved with a lane selection method as defined in claim 1, a lane selection system as defined in claim 6, a vehicle as defined in claim 10 and a computer-readable storage medium as defined in claim 11.

In order to achieve the above object, the technical solution of the present invention is provided as follows.

A lane selection method for an automatic-driving vehicle includes the following steps: providing a road environment model for a preset range around a vehicle, the road environment model includes a lane classification, a quantity of lanes and obstacle information of lanes in the preset range around the vehicle; acquiring the lane classification according to the road environment model; acquiring the quantity of lanes corresponding to a driving direction of the vehicle and the obstacle information of all the lanes corresponding to the driving direction of the vehicle according to the road environment model, if the vehicle is driving in a normal lane; in a case that the quantity of lanes corresponding to the driving direction of the vehicle is greater than or equal to three, performing stationary obstacle determination on the lanes in a priority sequence from left to right starting from a second left lane of the lanes corresponding to the driving direction of the vehicle, and selecting a lane without any stationary obstacle as a target lane.

Further, after acquiring the quantity of the lanes corresponding to the driving direction of the vehicle and the obstacle information of all lanes corresponding to the driving direction of the vehicle according to the road environment model, the method further includes: in a case that the quantity of the lanes corresponding to the driving direction of the vehicle is two, selecting a right lane as the target lane if no stationary obstacle is in the right lane; and selecting a left lane as the target lane if a stationary obstacle is in the right lane and no stationary obstacle is in the left lane.

Further, after acquiring the lane classification according to the road environment model, the method further includes: acquiring the obstacle information of all normal lanes connected to an acceleration lane according to the road environment model if the vehicle is driving in the acceleration lane; and selecting a lane without any stationary obstacle, from the normal lanes connected to the acceleration lane in a priority sequence from right to left, as the target lane to be used after leaving the acceleration lane.

Further, after acquiring the lane classification according to the road environment model, the method further includes: acquiring the quantity of lanes corresponding to the driving direction of the vehicle between the normal lane and a deceleration lane and the obstacle information of all the lanes corresponding to the driving direction of the vehicle between the normal lanes and the deceleration lane according to the road environment model if the vehicle is driving in the normal lane and is about to enter the deceleration lane; and selecting a lane without any stationary obstacle as the target lane to be used before entering the deceleration lane, according to the quantity of the lanes corresponding to the driving direction of the vehicle between the normal lane and the deceleration lane and in a priority sequence from right to left among all the lanes corresponding to the driving direction of the vehicle between the normal lane and the deceleration lane.

Further, a condition for determining that the vehicle is about to enter the deceleration lane is that an automatic-driving system sends a signal indicating to enter the deceleration lane and a distance between the vehicle and an entrance of the deceleration lane is less than a preset prompting distance.

Compared with the conventional technology, the lane selection method for the automatic-driving vehicle described in the present invention has the following advantages.

In the lane selection method for the automatic-driving vehicle according to the present invention, the target lane is selected according to the lane where the vehicle is located, the quantity of lanes, and the obstacles in the lanes, to control the automatic-driving vehicle to drive in the target lane, so that the vehicle can drive at a relatively high speed while ensuring normal driving.

Another object of the present invention is to provide a lane selection system for an automatic-driving vehicle, which can select a target lane according to a lane environment and an obstacle nearby when the vehicle is automatically driving.

In order to achieve the above object, the technical solution of the present invention is provided as follows.

A lane selection system for an automatic-driving vehicle includes: a road environment information providing model, configured to provide a road environment model for a preset range around a vehicle, where the road environment model includes a lane classification, a quantity and obstacle information of lanes in the preset range around the vehicle; and a control module, configured to acquire the quantity of lanes corresponding to a driving direction of the vehicle and the obstacle information of all the lanes corresponding to the driving direction of the vehicle according to the road environment model, if the vehicle is driving in a normal lane; and in a case that the quantity of lanes corresponding to the driving direction of the vehicle is greater than or equal to three, perform stationary obstacle determination on the lanes in a priority sequence from left to right starting from a second left lane of the lanes corresponding to the driving direction of the vehicle, and select a lane without any stationary obstacle as a target lane.

Further, the control module is further configured to, in a case that the quantity of the lanes corresponding to the driving direction of the vehicle is two, select a right lane as the target lane if no stationary obstacle is in the right lane; and select a left lane as the target lane if a stationary obstacle is in the right lane and no stationary obstacle is in the left lane.

Further, the control module is further configured to acquire the obstacle information of all normal lanes connected to an acceleration lane according to the road environment model if the vehicle is driving in the acceleration lane, and select a lane without any stationary obstacle, from the normal lanes connected to the acceleration lane in a priority sequence from right to left, as the target lane to be used after leaving the acceleration lane.

Further, the control module is further configured to, if the vehicle is driving in the normal lane and is about to enter a deceleration lane, acquire the quantity of lanes corresponding to the driving direction of the vehicle between the normal lane and the deceleration lane and the obstacle information of all the lanes corresponding to the driving direction of the vehicle between the normal lane and the deceleration lane according to the road environment model; and select a lane without any stationary obstacle as a target lane to be used before entering the deceleration lane, according to the quantity of the lanes corresponding to the driving direction of the vehicle between the normal lane and the deceleration lane and in a priority sequence from right to left among all the lanes corresponding to the driving direction of the vehicle between the normal lane and the deceleration lane.

The lane selection system for an automatic-driving vehicle has the same advantage as the above lane selection method for an automatic-driving vehicle, which will not be repeated here.

Another object of the present invention is to provide a vehicle which can select a target lane according to a lane environment and an obstacle nearby when the vehicle is automatically driving.

In order to achieve the above object, the technical solution of the present invention is provided as follows.

A vehicle is provided with the lane selection system for an automatic-driving vehicle as described in the above embodiment.

The vehicle has the same advantages as the system of dynamically generating a target line for an automatic-driving vehicle over the conventionally technology, which will not be repeated here.

A fourth object of the present invention is to provide a computer-readable storage medium.

In order to achieve the above object, the technical solution of the present invention is provided as follows.

A computer-readable storage medium stores a lane selection program for an automatic-driving vehicle, and the lane selection program for an automatic-driving vehicle is used to, when being executed by a processor, perform the lane selection method for an automatic-driving vehicle according to the first aspect described above.

### BRIEF DESCRIPTION OF THE DRAWINGS

The drawings constituting a part of the present disclosure are used to provide a further understanding of the present invention, and the exemplary embodiments and descriptions of the present disclosure are used to explain the technical solutions of the present invention, and do not constitute an improper limitation to the present invention, which is defined by the appended claims. In the drawings:
FIG. 1 is a flowchart of a lane selection method for an automatic-driving vehicle according to an embodiment of the present invention;
FIG. 2 is a schematic diagram of an acceleration lane, a normal lane, and a deceleration lane in an embodiment of the present invention;
FIG. 3 is a schematic diagram of a vehicle about to enter a deceleration lane in an embodiment of the present invention;
FIG. 4 is a structural block diagram of a lane selection system for an automatic-driving vehicle according to an embodiment of the present invention.

### DETAILED DESCRIPTION OF THE EMBODIMENTS

Hereinafter, the technical solution of the present invention will be described with reference to the drawings and in combination with the embodiments.

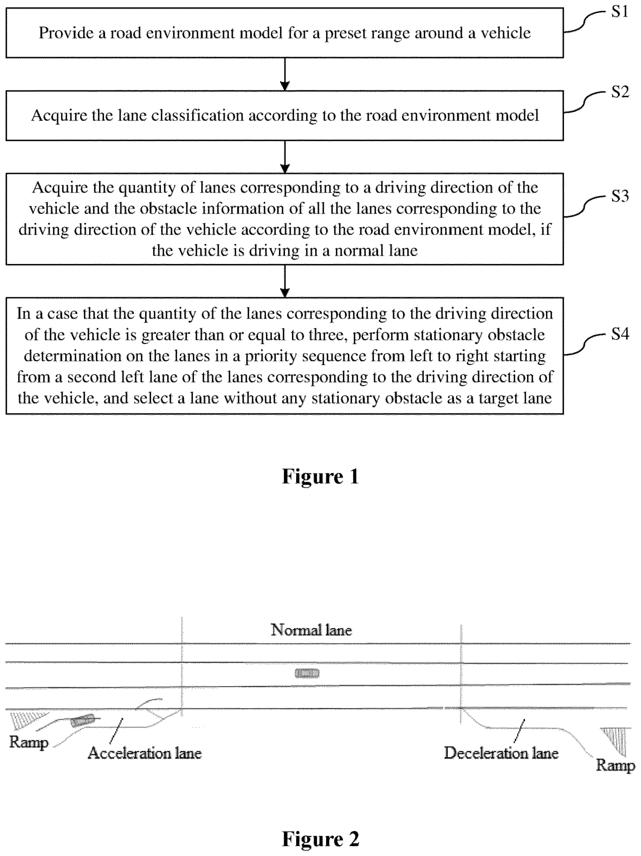

FIG. 1 is a flowchart of a lane selection method for an automatic-driving vehicle according to an embodiment of the present invention.

As shown in FIG. 1, a lane selection method for an automatic-driving vehicle according to an embodiment of the present invention includes the following steps S 1 to S4.

In step S 1, a road environment model for a preset range around a vehicle is provided, and the road environment model includes a lane classification, a quantity and obstacle information of lanes in the preset range around the vehicle.

Specifically, the vehicle is provided with an environment sensing system, which replaces a sensory system of a driver to extract current driving environment information, such as a road, a vehicle location, the lane classification, the quantity of lanes and the obstacle information of each lane, through different sensors. The above information is screened, associated, tracked, filtered, or the like, so as to obtain more accurate road information, object location, size and other information, which are used to finally generate the road environment model. The road environment model outputs the lane classification, the quantity of lanes and the obstacle information of each lane in the preset range (for example, 200m) in front of and behind the vehicle in real time.

In step S2, the lane classification is acquired according to the road environment model. In this embodiment, the lane classification includes a normal lane, an acceleration lane, and a deceleration lane. The normal lane is a lane between a position where the vehicle leaves the acceleration lane to enter an expressway main road and a position where the vehicle leaves the expressway main road to enter the deceleration lane, and the normal lane does not include special roads, such as a narrowed road, a widened road or a crotched road.

FIG. 2 is a schematic diagram of an acceleration lane, a normal lane and a deceleration lane according to an embodiment of the present invention. As shown in FIG. 2, the quantity of normal lanes is three.

In step S3, the quantity of the lanes corresponding to a driving direction of the vehicle and the obstacle information of all the lanes corresponding to the driving direction of the vehicle are acquired according to the road environment model, if the vehicle is driving in a normal lane.

In step S4, in a case that the quantity of the lanes corresponding to the driving direction of the vehicle is greater than or equal to three, stationary obstacle determination (the stationary obstacle may be a prompting sign erected due to road construction, a vehicle unable to move due to traffic accident, a solid obstacle failing in the lane, or the like.) is performed on the lanes in a priority sequence from left to right starting from a second left lane of the lanes corresponding to the driving direction of the vehicle, and a lane without any stationary obstacle is selected as a target lane. That is, except a leftmost lane, the lane without any stationary obstacle is selected as the target lane based on the principle of driving on the left side, so that the vehicle can maintain a relatively high speed in the automatic driving.

In an embodiment of the present invention, after step S3, the method further includes that, in a case that the quantity of the lanes corresponding to the driving direction of the vehicle is two, a right lane is selected as the target lane if no stationary obstacle is in the right lane; a left lane is selected as the target lane if a stationary obstacle is in the right lane and no stationary obstacle is in the left lane. That is, when the vehicle is automatically driving in the normal lane, in the case that there are totally two lanes in the driving direction of the vehicle, the right lane is first considered. That is, if no obstacle is in the right lane, the right lane is selected as the target lane, and if an obstacle is in the right lane and no obstacle is in the left lane, the left lane is selected as the target lane.

In an embodiment of the present invention, after step S2, the method further includes that, the obstacle information of all normal lanes connected to an acceleration lane is acquired according to the road environment model if the vehicle is driving in the acceleration lane, and a lane without any stationary obstacle is selected, in a priority sequence from right to left among normal lanes connected to the acceleration lane, as a target lane to be used after leaving the acceleration lane. That is, when the vehicle is about to enter the normal lane from the acceleration lane, a rightmost lane of the normal lanes connected to the acceleration lane is first considered. If no stationary obstacle is in the rightmost lane, the rightmost lane is selected as the target lane to be used after leaving the acceleration lane. If a stationary obstacle is in the rightmost lane, the lane (in the preset range) without any obstacle is selected, in a priority sequence from right to left, as the target lane to be used after leaving the acceleration lane.

In an embodiment of the present invention, after step S2, the method further includes that, the quantity of lanes corresponding to the driving direction of the vehicle between the a normal lane and a deceleration lane, and the obstacle information of all the lanes corresponding to the driving direction of the vehicle between the normal lane and the deceleration lane are acquired according to the road environment model, if the vehicle is driving in the normal lane and is about to enter the deceleration lane. Then a lane without any stationary obstacle is selected as a target lane to be used before entering the deceleration lane, according to the quantity of the lanes corresponding to the driving direction of the vehicle between the normal lane and the deceleration lane and in a priority sequence from right to left among all the lanes corresponding to the driving direction of the vehicle between the normal lane and the deceleration lane. That is to say, when the vehicle is driving on the normal lane and is close to an entrance of the deceleration lane, a rightmost lane is first considered. If no stationary obstacle is in the rightmost lane, the rightmost lane is selected as the target lane to be used before entering the deceleration lane. If an obstacle is in the rightmost lane, the lane (in the preset range) without any stationary obstacle is selected in a priority sequence from right to left as the target lane to be used before entering the deceleration lane.

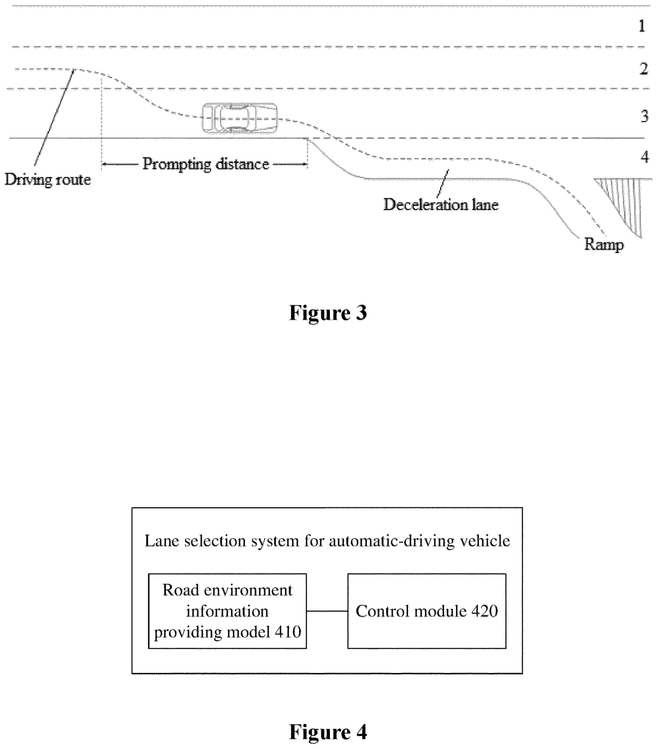

FIG. 3 is a schematic diagram of a vehicle about to enter the deceleration lane according to an embodiment of the present invention. As shown in FIG. 3, in an embodiment of the present invention, a condition for determining that the vehicle is about to enter the deceleration lane is that a signal indicating to enter the deceleration lane is received from an automatic-driving system, and a distance between the vehicle and the entrance of the deceleration lane is less than a preset prompting distance.

In the lane selection method for the automatic-driving vehicle according to the present invention, the target lane is selected according to the lane where the vehicle is located, the quantity of lanes and the obstacle in the lanes, to control the automatic-driving vehicle to drive in the target lane, so that the vehicle can drive at a relatively high speed while ensuring normal driving.

FIG. 4 is a structural block diagram of a lane selection system for an automatic-driving vehicle according to an embodiment of the present invention. As shown in FIG. 4, the lane selection system for the automatic-driving vehicle according to the embodiment of the present invention includes a road environment information providing model 410 and a control module 420.

The road environment information providing model 410 is configured to provide a road environment model for a preset range around a vehicle, and provide a lane classification, a quantity and obstacle information of all lanes in the preset range around the vehicle. The control module 420 is configured to acquire the lane classification according to the road environment model, and acquire the quantity of the lanes corresponding to a driving direction of the vehicle and the obstacle information of all the lanes corresponding to the driving direction of the vehicle according to the road environment model, if the vehicle is driving in a normal lane. In a case that the quantity of lanes corresponding to the driving direction of the vehicle is greater than or equal to three, the control module 420 is configured to perform stationary obstacle determination on the lanes in a priority sequence from left to right starting from a second left lane of the lanes corresponding to the driving direction of the vehicle, and select a lane without any stationary obstacle as a target lane.

In an embodiment of the present invention, the control module 420 is configured to, in a case that the quantity of the lanes corresponding to the driving direction of the vehicle is two, select a right lane as the target lane if no stationary obstacle is in the right lane, and select a left lane as the target lane if a stationary obstacle is in the right lane and no stationary obstacle is in the left lane.

In an embodiment of the present invention, the control module 420 is configured to acquire the obstacle information of all normal lanes connected to an acceleration lane according to the road environment model if the vehicle is driving in the acceleration lane, and select a lane without any stationary obstacle, from the normal lanes connected to the acceleration lane in a priority sequence from right to left, as the target lane to be used after leaving the acceleration lane.

In an embodiment of the present invention, the control module 420 is configured to, if the vehicle is driving in the normal lane and is about to enter a deceleration lane, acquire the quantity of the lanes corresponding to the driving direction of the vehicle between the normal lane and the deceleration lane and the obstacle information of all the lanes corresponding to the driving direction of the vehicle between the normal lane and the deceleration lane according to the road environment model, and select a lane without any stationary obstacle as a target lane to be used before entering the deceleration lane, according to the quantity of the lanes corresponding to the driving direction of the vehicle between the normal lane and the deceleration lane and in a priority sequence from right to left among all the lanes corresponding to the driving direction of the vehicle between the normal lane and the deceleration lane.

With the lane selection system for an automatic-driving vehicle according to the present invention, the target lane is selected according to the lane where the vehicle is located, the quantity of lanes and the obstacle in the lanes, to control the automatic-driving vehicle to drive in the target lane, so that the vehicle can drive at a relatively high speed while ensuring normal driving.

It should be noted that, the specific implementation of the lane selection system for an automatic-driving vehicle in the embodiments of the present invention is similar to the implementation of the lane selection method for an automatic-driving vehicle in the embodiments of the present invention. One may refer to the description of the method for details, which will not be repeated here for conciseness.

Further, a vehicle is provided according to the embodiments of the present invention, and the vehicle is provided with the lane selection system for an automatic-driving vehicle according to any one of the above embodiments. The vehicle can select the target lane according to the lane environment and the obstacle nearby when the vehicle is automatically driving.

A computer-readable storage medium according to an embodiment of the present invention, stores a lane selection program for an automatic-driving vehicle. The lane selection program for an automatic-driving vehicle is executed by a processor to perform the lane selection method for an automatic-driving vehicle according to any one of the above embodiments of the present invention.

It should be noted that, the logic and/or the steps represented in the flowchart or described in other ways herein, for example, may be considered as a sequence list of executable instructions for realizing logic functions, and can be specifically implemented in any computer-readable medium for the use by an instruction execution system, equipment or device (such as computer-based system, a system including a processor or other system capable of taking and executing instructions from the instruction execution system, the equipment or the device), or for the use in combination with the instruction execution system, the equipment or the device. In the specification, the "computer-readable medium" may be any device containing, storing, communicating, propagating or transmitting a program for use by the instruction execution system, equipment or device or in combination with the instruction execution system, equipment or device. More specific examples (non-exhaustive list) of the computer-readable medium include the following: an electrical connection part (an electronic device) with one or more wiring, a portable computer disk case (a magnetic device), a random access memory (RAM), a read-only memory (ROM), an erasable and editable read-only memory (EPROM or flash memory), a fiber optic device, and a portable compact disk read-only memory (CDROM). In addition, the computer-readable medium may even be paper or other suitable medium on which the program is printed, since the program can be obtained electronically, for example, by optically scanning the paper or other medium, followed by editing, interpreting, or other suitable processing if necessary, and then storing the program in a computer memory.

It should be understood that, each part of the present invention can be implemented by hardware, software, firmware, or a combination of them. In the above embodiments, multiple steps or methods can be implemented by software and firmware stored in a memory and executed by a suitable instruction execution system. For example, if the steps or methods are implemented by hardware, as in another embodiment, the steps or methods can be implemented by any one or a combination of the following technologies known in the art: discrete logic circuit with a logic gate circuit for realizing logic function on a data signal, an application specific integrated circuit with a suitable combinational logic gate, a programmable gate array (PGA), a field programmable gate array (FPGA), and the like.

Although the embodiments of the present invention haven been shown and described above, it should be understood that the above embodiments are exemplary and cannot be understood as a limitation to the present invention. Those skilled in the art can make changes, modifications, substitutions and variations to the above embodiments within the scope of the present invention as defined by the appended claims.

## Claims

1. A lane selection method for an automatic-driving vehicle, comprising:
providing a road environment model for a preset range around a vehicle (S1), wherein the road environment model comprises a lane classification, a quantity and obstacle information of lanes in the preset range around the vehicle;
acquiring the lane classification according to the road environment model (S2);
acquiring the quantity of lanes corresponding to a driving direction of the vehicle and the obstacle information of all the lanes corresponding to the driving direction of the vehicle according to the road environment model, if the vehicle is driving in a normal lane (S3);
**characterized in that**
in a case that the quantity of the lanes corresponding to the driving direction of the vehicle is greater than or equal to three, performing stationary obstacle determination on the lanes in a priority sequence from left to right starting from a second left lane of the lanes corresponding to the driving direction of the vehicle, and selecting a lane without any stationary obstacle as a target lane (S4),
wherein the normal lane is a lane between a position where the vehicle leaves an acceleration lane to enter an expressway main road and a position where the vehicle leaves the expressway main road to enter a deceleration lane.

2. The lane selection method for an automatic-driving vehicle according to claim 1, wherein after acquiring the quantity of the lanes corresponding to the driving direction of the vehicle and the obstacle information of all the lanes corresponding to the driving direction of the vehicle according to the road environment model, the method further comprises:
in a case that the quantity of the lanes corresponding to the driving direction of the vehicle is two,
selecting a right lane as the target lane if no stationary obstacle is in the right lane; and selecting a left lane as the target lane if a stationary obstacle is in the right lane and no stationary obstacle is in the left lane.

3. The lane selection method for an automatic-driving vehicle according to claim 1 or 2, wherein after acquiring the lane classification according to the road environment model, the method further comprises:
acquiring the obstacle information of all normal lanes connected to an acceleration lane according to the road environment model if the vehicle is driving in the acceleration lane; and
selecting a lane without any stationary obstacle, from the normal lanes connected to the acceleration lane in a priority sequence from right to left, as the target lane to be used after leaving the acceleration lane.

4. The lane selection method for an automatic-driving vehicle according to any one of claims 1 to 3, wherein after acquiring the lane classification according to the road environment model, the method further comprises:
acquiring the quantity of lanes corresponding to the driving direction of the vehicle between the normal lane and a deceleration lane and the obstacle information of all the lanes corresponding to the driving direction of the vehicle between the normal lane and the deceleration lane according to the road environment model, if the vehicle is driving in the normal lane and is about to enter the deceleration lane; and
selecting a lane without any stationary obstacle as the target lane to be used before entering the deceleration lane, according to the quantity of the lanes corresponding to the driving direction of the vehicle between the normal lane and the deceleration lane and in a priority sequence from right to left among all the lanes corresponding to the driving direction of the vehicle between the normal lane and the deceleration lane.

5. The lane selection method for an automatic-driving vehicle according to claim 4, wherein a condition for determining that the vehicle is about to enter the deceleration lane is that an automatic-driving system sends a signal indicating to enter the deceleration lane and a distance between the vehicle and an entrance of the deceleration lane is less than a preset prompting distance.

6. A lane selection system for an automatic-driving vehicle, comprising:
a road environment information providing model (410), configured to provide a road environment model for a preset range around a vehicle, wherein the road environment model comprises a lane classification, a quantity and obstacle information of lanes in the preset range around the vehicle; and
a control module (420), configured to:
acquire the lane classification according to the road environment model, and
acquire the quantity of lanes corresponding to a driving direction of the vehicle and the obstacle information of all the lanes corresponding to the driving direction of the vehicle according to the road environment model, if the vehicle is driving in a normal lane;
**characterized in that**, the control module (420) further configured to:
in a case that the quantity of lanes corresponding to the driving direction of the vehicle is greater than or equal to three, perform stationary obstacle determination on the lanes in a priority sequence from left to right starting from a second left lane of the lanes corresponding to the driving direction of the vehicle, and select a lane without any stationary obstacle as a target lane,
wherein the normal lane is a lane between a position where the vehicle leaves an acceleration lane to enter an expressway main road and a position where the vehicle leaves the expressway main road to enter a deceleration lane.

7. The lane selection system for an automatic-driving vehicle according to claim 6, wherein the control module (420) is further configured to, in a case that the quantity of the lanes corresponding to the driving direction of the vehicle is two, select a right lane as the target lane if no stationary obstacle is in the right lane; and select a left lane as the target lane if a stationary obstacle is in the right lane and no stationary obstacle is in the left lane.

8. The lane selection system for an automatic-driving vehicle according to claim 6 or 7, wherein the control module (420) is further configured to acquire the obstacle information of all normal lanes connected to an acceleration lane according to the road environment model if the vehicle is driving in the acceleration lane, and select a lane without any stationary obstacle, from the normal lanes connected to the acceleration lane in a priority sequence from right to left, as the target lane to be used after leaving the acceleration lane.

9. The lane selection system for an automatic-driving vehicle according to any one of claims 6 to 8, wherein the control module (420) is further configured to, if the vehicle is driving in the normal lane and is about to enter a deceleration lane,
acquire the quantity of lanes corresponding to the driving direction of the vehicle between the normal lane and the deceleration lane and the obstacle information of all the lanes corresponding to the driving direction of the vehicle between the normal lane and the deceleration lane according to the road environment model; and
select a lane without any stationary obstacle as a target lane to be used before entering the deceleration lane, according to the quantity of the lanes corresponding to the driving direction of the vehicle between the normal lane and the deceleration lane and in a priority sequence from right to left among all the lanes corresponding to the driving direction of the vehicle between the normal lane and the deceleration lane.

10. A vehicle, comprising the lane selection system for an automatic-driving vehicle according to any one of claims 6 to 9.

11. A computer-readable storage medium storing a lane selection program for an automatic-driving vehicle, wherein the lane selection program for an automatic-driving vehicle is used to, when being executed by a processor, perform the lane selection method for an automatic-driving vehicle according to any one of claims 1 to 5.

## Patentansprüche

1. Fahrspurwahlverfahren für ein automatisch fahrendes Fahrzeug, mit den folgenden Schritten:
Bereitstellen eines Straßenumgebungsmodells für einen voreingestellten Bereich um ein Fahrzeug (S1), wobei das Straßenumgebungsmodell eine Fahrspurklassifizierung, eine Anzahl und Hindernisinformationen bezüglich Fahrspuren in dem voreingestellten Bereich um das Fahrzeug aufweist;
Erfassen der Fahrspurklassifizierung gemäß dem Straßenumgebungsmodell (52) ;
Erfassen der Anzahl der Fahrspuren, welche einer Fahrtrichtung des Fahrzeugs entsprechen, und der Hindernisinformationen sämtlicher Fahrspuren, welche der Fahrtrichtung des Fahrzeugs entsprechen, gemäß dem Straßenumgebungsmodell, wenn das Fahrzeug auf einer normalen Fahrspur (S3) fährt;
**dadurch gekennzeichnet,**
**dass**, wenn die Anzahl der Fahrspuren, welche der Fahrtrichtung des Fahrzeugs entsprechen, größer als oder gleich drei ist, eine Erkennung stationärer Hindernisse in den Fahrspuren mit einer Priorität von links nach rechts durchgeführt wird, beginnend mit einer zweiten linken Fahrspur der Fahrspuren, welche der Fahrtrichtung des Fahrzeugs entsprechen, und Wählen einer Fahrspur ohne ein stationäres Hindernis als eine Zielfahrspur (S4),
wobei die normale Fahrspur eine Fahrspur zwischen einer Position, an welcher ein Fahrzeug eine Beschleunigungsfahrspur verlässt, um auf eine Schnellstraße auffährt, und einer Position ist, an welcher das Fahrzeug die Schnellstraße verlässt, um auf eine Verzögerungsspur zu fahren.

2. Fahrspurwahlverfahren für ein automatisch fahrendes Fahrzeug nach Anspruch 1, bei welchem das Verfahren nach dem Erfassen der Anzahl der Fahrspuren, welche der Fahrtrichtung des Fahrzeugs entsprechen, und der Hindernisinformationen sämtlicher Fahrspuren, welche der Fahrtrichtung des Fahrzeugs entsprechen, gemäß dem Straßenumgebungsmodell, ferner die folgenden Schritte aufweist:
wenn die Anzahl der Fahrspuren, welche der Fahrtrichtung des Fahrzeugs entsprechen, zwei ist,
Wählen einer rechten Fahrspur als die Zielfahrspur, wenn sich kein stationäres Hindernis auf der rechten Fahrspur befindet; und
Wählen der linken Fahrspur als die Zielfahrspur, wenn sich ein stationäres Hindernis auf der rechten Fahrspur befindet und sich kein stationäres Hindernis auf der linken Fahrspur befindet.

3. Fahrspurwahlverfahren für ein automatisch fahrendes Fahrzeug nach Anspruch 1 oder 2, bei welchem das Verfahren nach dem Erfassen der Fahrspurklassifizierung gemäß dem Straßenumgebungsmodell ferner die folgenden Schritte aufweist:
Erfassen der Hindernisinformationen sämtlicher normale Fahrspuren, die mit einer Beschleunigungsfahrspur verbunden sind, gemäß dem Straßenumgebungsmodell, wenn das Fahrzeug in der Beschleunigungsfahrspur fährt; und
Wählen einer Fahrspur ohne stationäre Hindernisse aus den normale Fahrspuren, die mit der Beschleunigungsfahrspur verbunden sind, in einer Prioritätsfolge von rechts nach links, als die nach dem Verlassen der Beschleunigungsspur zu verwendende Zielfahrspur.

4. Fahrspurwahlverfahren für ein automatisch fahrendes Fahrzeug nach einem der Ansprüche 1 bis 3, bei welchem das Verfahren nach dem Erfassen der Fahrspurklassifizierung gemäß dem Straßenumgebungsmodell ferner die folgenden Schritte aufweist:
Erfassen der Anzahl der Fahrspuren, welche der Fahrtrichtung des Fahrzeugs entsprechen, zwischen der normalen Fahrspur und einer Verzögerungsfahrspur und der Hindernisinformationen bezüglich sämtlicher Fahrspuren, welche der Fahrtrichtung des Fahrzeugs entsprechen, zwischen der normale Fahrspur und der Verzögerungsfahrspur, gemäß dem Straßenumgebungsmodell, wenn das Fahrzeug auf der normalen Fahrspur fährt und auf die Verzögerungsfahrspur zu fahren beabsichtigt; und
Wählen einer Fahrspur ohne ein stationäres Hindernis als die zu verwendende Zielfahrspur vor dem Auffahren auf die Verzögerungsspur, gemäß der Anzahl der Fahrspuren, welche der Fahrtrichtung des Fahrzeugs entsprechen, zwischen der normalen Fahrspur und einer Verzögerungsfahrspur und in einer Prioritätsfolge von rechts nach links unter sämtlichen Fahrspuren, welche der Fahrtrichtung des Fahrzeugs entsprechen, zwischen der normalen Fahrspur und der Verzögerungsfahrspur.

5. Fahrspurwahlverfahren für ein automatisch fahrendes Fahrzeug nach Anspruch 4, bei welchem eine Bedingung für die Feststellung, dass das Fahrzeug auf die Verzögerungsspur zu fahren beabsichtig, ist, dass ein System für das automatische Fahren ein Signal sendet, dass das Einfahren in die Verzögerungsspur angibt, und eine Entfernung zwischen dem Fahrzeug und einer Einfahrt der Verzögerungsspur geringer als eine voreingestellte Meldeentfernung ist.

6. Fahrspurwahlsystem für ein automatisch fahrendes Fahrzeug, mit:
einem Straßenumgebungsinformationenbereitstellungsmodell (400), das dazu ausgebildet ist, ein Straßenumgebungsmodell für einen voreingestellten Bereich um ein Fahrzeug bereitzustellen, wobei das Straßenumgebungsmodell eine Fahrspurklassifizierung, eine Anzahl und Hindernisinformationen bezüglich Fahrspuren in dem voreingestellten Bereich um das Fahrzeug aufweist; und
einem Steuermodul (420), das dazu ausgebildet ist,
die Fahrspurklassifizierung gemäß dem Straßenumgebungsmodell zu erfassen; und
die Anzahl der Fahrspuren, welche einer Fahrtrichtung des Fahrzeugs entsprechen, und die Hindernisinformationen sämtlicher Fahrspuren, welche der Fahrtrichtung des Fahrzeugs entsprechen, gemäß dem Straßenumgebungsmodell zu erfassen, wenn das Fahrzeug auf einer normalen Fahrspur fährt;
**dadurch gekennzeichnet, dass** das Steuermodul (420) ferner dazu ausgebildet ist,
wenn die Anzahl der Fahrspuren, welche der Fahrtrichtung des Fahrzeugs entsprechen, größer als oder gleich drei ist, eine Erkennung stationärer Hindernisse in den Fahrspuren mit einer Priorität von links nach rechts durchzuführen, beginnend mit einer zweiten linken Fahrspur der Fahrspuren, welche der Fahrtrichtung des Fahrzeugs entsprechen, und eine Fahrspur ohne ein stationäres Hindernis als eine Zielfahrspur zu wählen,
wobei die normale Fahrspur eine Fahrspur zwischen einer Position, an welcher ein Fahrzeug eine Beschleunigungsfahrspur verlässt, um auf eine Schnellstraße auffährt, und einer Position ist, an welcher das Fahrzeug die Schnellstraße verlässt, um auf eine Verzögerungsspur zu fahren.

7. Fahrspurwahlsystem für ein automatisch fahrendes Fahrzeug nach Anspruch 6, bei welchem das Steuermodul (420) ferner dazu ausgebildet ist, wenn die Anzahl der Fahrspuren, welche der Fahrtrichtung des Fahrzeugs entsprechen, zwei ist, eine rechte Fahrspur als die Zielfahrspur zu wählen, wenn sich kein stationäres Hindernis auf der rechten Fahrspur befindet; und eine linke Fahrspur als die Zielfahrspur zu wählen, wenn sich ein stationäres Hindernis auf der rechten Fahrspur befindet und sich kein stationäres Hindernis auf der linken Fahrspur befindet.

8. Fahrspurwahlsystem für ein automatisch fahrendes Fahrzeug nach Anspruch 6 oder 7, bei welchem das Steuermodul (420) ferner dazu ausgebildet ist, die Hindernisinformationen sämtlicher normale Fahrspuren, die mit einer Beschleunigungsfahrspur verbunden sind, gemäß dem Straßenumgebungsmodell zu erfassen, wenn das Fahrzeug in der Beschleunigungsfahrspur fährt; und eine Fahrspur ohne stationäre Hindernisse aus den normale Fahrspuren, die mit der Beschleunigungsfahrspur verbunden sind, in einer Prioritätsfolge von rechts nach links, als die nach dem Verlassen der Beschleunigungsspur zu verwendende Zielfahrspur zu wählen.

9. Fahrspurwahlsystem für ein automatisch fahrendes Fahrzeug nach einem der Ansprüche 6 bis 8, bei welchem das Steuermodul (420) ferner dazu ausgebildet ist, wenn das Fahrzeug auf der normalen Fahrspur fährt und auf eine Verzögerungsspur zu fahren beabsichtigt,
die Anzahl der Fahrspuren, welche der Fahrtrichtung des Fahrzeugs entsprechen, zwischen der normalen Fahrspur und einer Verzögerungsfahrspur und der Hindernisinformationen bezüglich sämtlicher Fahrspuren, welche der Fahrtrichtung des Fahrzeugs entsprechen, zwischen der normale Fahrspur und der Verzögerungsfahrspur, gemäß dem Straßenumgebungsmodell zu erfassen; und
eine Fahrspur ohne ein stationäres Hindernis als die zu verwendende Zielfahrspur vor dem Auffahren auf die Verzögerungsspur, gemäß der Anzahl der Fahrspuren, welche der Fahrtrichtung des Fahrzeugs entsprechen, zwischen der normalen Fahrspur und einer Verzögerungsfahrspur und in einer Prioritätsfolge von rechts nach links unter sämtlichen Fahrspuren, welche der Fahrtrichtung des Fahrzeugs entsprechen, zwischen der normalen Fahrspur und der Verzögerungsfahrspur zu wählen.

10. Fahrzeug mit dem Fahrspurwahlsystem für ein automatisch fahrendes Fahrzeug nach einem der Ansprüche 6 bis 9.

11. Computerlesbares Speichermedium, welches ein Fahrspurwahlprogramm für ein automatisch fahrendes Fahrzeug speichert, wobei das Fahrspurwahlprogramm für ein automatisch fahrendes Fahrzeug bei Ausführung durch einen Prozessor dazu dient, das Fahrspurwahlverfahren für ein automatisch fahrendes Fahrzeug nach einem der Ansprüche 1 bis 5 durchzuführen.

## Revendications

1. Procédé de sélection de voie pour un véhicule à conduite automatique, comprenant les étapes suivantes :
fournir un modèle d'environnement de route pour une plage prédéfinie autour d'un véhicule (S 1), dans lequel le modèle d'environnement de route comprend une classification de voies, une quantité et des informations d'obstacle de voies dans la plage prédéfinie autour du véhicule ;
acquérir la classification de voies selon le modèle d'environnement de route (S2) ;
acquérir la quantité de voies correspondant à une direction de conduite du véhicule et les informations d'obstacle de toutes les voies correspondant à la direction de conduite du véhicule selon le modèle d'environnement de route, si le véhicule roule dans une voie normale (S3) ;
**caractérisé en ce que**
dans le cas où la quantité des voies correspondant à la direction de conduite du véhicule est supérieure ou égale à trois, réaliser une détermination d'obstacle fixe sur les voies dans une séquence de priorité de gauche à droite à partir d'une seconde voie de gauche des voies correspondant à la direction de conduite du véhicule, et sélectionner une voie sans un quelconque obstacle fixe comme voie cible (S4),
dans lequel la voie normale est une voie entre une position où le véhicule quitte une voie d'accélération pour entrer dans une route principale d'autoroute et une position où le véhicule quitte la route principale d'autoroute pour entrer dans une voie de décélération.

2. Procédé de sélection de voie pour un véhicule à conduite automatique selon la revendication 1, dans lequel après acquisition de la quantité des voies correspondant à la direction de conduite du véhicule et des informations d'obstacle de toutes les voies correspondant à la direction de conduite du véhicule selon le modèle d'environnement de route, le procédé comprend en outre les étapes suivantes :
dans le cas où la quantité des voies correspondant à la direction de circulation du véhicule est de deux,
sélectionner une voie de droite comme la voie cible si aucun obstacle fixe n'est dans la voie de droite ; et sélectionner une voie de gauche comme voie cible si un obstacle fixe est dans la voie de droite et qu'aucun obstacle fixe n'est dans la voie de gauche.

3. Procédé de sélection de voie pour un véhicule à conduite automatique selon la revendication 1 ou 2, dans lequel après l'acquisition de la classification de voies selon le modèle d'environnement de route, le procédé comprend en outre les étapes suivantes :
acquérir les informations d'obstacle de toutes les voies normales reliées à une voie d'accélération selon le modèle d'environnement de route si le véhicule roule dans la voie d'accélération ; et
sélectionner une voie sans un quelconque obstacle fixe, parmi les voies normales reliées à la voie d'accélération dans une séquence de priorité de droite à gauche, comme la voie cible à utiliser après avoir quitté la voie d'accélération.

4. Procédé de sélection de voie pour un véhicule à conduite automatique selon l'une quelconque des revendications 1 à 3, dans lequel après l'acquisition de la classification de voies selon le modèle d'environnement de route, le procédé comprend en outre les étapes suivantes :
acquérir la quantité de voies correspondant à la direction de conduite du véhicule entre la voie normale et une voie de décélération et les informations d'obstacle de toutes les voies correspondant à la direction de conduite du véhicule entre la voie normale et la voie de décélération selon le modèle d'environnement de route, si le véhicule roule dans la voie normale et est sur le point d'entrer dans la voie de décélération ; et
sélectionner une voie sans un quelconque obstacle fixe comme la voie cible à utiliser avant d'entrer dans la voie de décélération, en fonction de la quantité des voies correspondant à la direction de conduite du véhicule entre la voie normale et la voie de décélération et selon une séquence de priorité de droite à gauche parmi toutes les voies correspondant à la direction de conduite du véhicule entre la voie normale et la voie de décélération.

5. Procédé de sélection de voie pour un véhicule à conduite automatique selon la revendication 4, dans lequel une condition pour déterminer que le véhicule est sur le point d'entrer dans la voie de décélération est qu'un système de conduite automatique envoie un signal indiquant d'entrer dans la voie de décélération et qu'une distance entre le véhicule et une entrée de la voie de décélération est inférieure à une distance d'invite prédéfinie.

6. Système de sélection de voie pour un véhicule à conduite automatique, comprenant :
un modèle (410) fournissant des informations d'environnement de route (410), configuré pour fournir un modèle d'environnement de route pour une plage prédéfinie autour d'un véhicule, dans lequel le modèle d'environnement de route comprend une classification de voies, une quantité et des informations d'obstacle de voies dans la plage prédéfinie autour du véhicule ; et
un module de commande (420), configuré pour :
acquérir la classification de voies selon le modèle de l'environnement de route, et
acquérir la quantité de voies correspondant à une direction de conduite du véhicule et les informations d'obstacle de toutes les voies correspondant à la direction de conduite du véhicule selon le modèle d'environnement de route, si le véhicule roule dans une voie normale ;
**caractérisé en ce que**, le module de commande (420) est configuré pour :
dans le cas où la quantité des voies correspondant à la direction de conduite du véhicule est supérieure ou égale à trois, réaliser une détermination d'obstacle fixe sur les voies dans une séquence de priorité de gauche à droite à partir d'une seconde voie de gauche des voies correspondant à la direction de conduite du véhicule, et sélectionner une voie sans un quelconque obstacle fixe comme voie cible,
dans lequel la voie normale est une voie entre une position où le véhicule quitte une voie d'accélération pour entrer dans une route principale d'autoroute et une position où le véhicule quitte la route principale d'autoroute pour entrer dans une voie de décélération.

7. Système de sélection de voie pour un véhicule à conduite automatique selon la revendication 6, dans lequel le module de commande (420) est en outre configuré pour, dans le cas où la quantité des voies correspondant à la direction de conduite du véhicule est de deux, sélectionner une voie de droite en tant que voie cible si aucun obstacle fixe n'est dans la voie de droite ; et sélectionner une voie de gauche en tant que voie cible si un obstacle fixe est dans la voie de droite et qu'aucun obstacle fixe n'est dans la voie de gauche.

8. Système de sélection de voie pour un véhicule à conduite automatique selon la revendication 6 ou 7, dans lequel le module de commande (420) est en outre configuré pour acquérir les informations d'obstacle de toutes les voies normales connectées à une voie d'accélération selon le modèle d'environnement de route si le véhicule est conduit dans la voie d'accélération, et sélectionner une voie sans obstacle fixe, à partir des voies normales connectées à la voie d'accélération dans une séquence de priorité de droite à gauche, comme voie cible à utiliser après avoir quitté la voie d'accélération.

9. Système de sélection de voie pour un véhicule à conduite automatique selon l'une quelconque des revendications 6 à 8, dans lequel le module de commande (420) est en outre configuré pour, si le véhicule roule dans la voie normale et est sur le point d'entrer dans une voie de décélération,
acquérir la quantité de voies correspondant à la direction de conduite du véhicule entre la voie normale et la voie de décélération et les informations d'obstacle de toutes les voies correspondant à la direction de conduite du véhicule entre la voie normale et la voie de décélération selon le modèle d'environnement de route ; et
sélectionner une voie sans un quelconque obstacle fixe comme la voie cible à utiliser avant d'entrer dans la voie de décélération, en fonction de la quantité des voies correspondant à la direction de conduite du véhicule entre la voie normale et la voie de décélération et selon une séquence de priorité de droite à gauche parmi toutes les voies correspondant à la direction de conduite du véhicule entre la voie normale et la voie de décélération.

10. Véhicule, comprenant le système de sélection de voie pour un véhicule à conduite automatique selon l'une quelconque des revendications 6 à 9.

11. Support de stockage lisible par ordinateur stockant un programme de sélection de voie pour un véhicule à conduite automatique, dans lequel le programme de sélection de voie pour un véhicule à conduite automatique est utilisé pour, lorsqu'il est exécuté par un processeur, exécuter le procédé de sélection de voie pour un véhicule à conduite automatique selon l'une quelconque des revendications 1 à 5.
